# FASCICULE DE BREVET EUROPEEN

(11) **EP 0 681 356 B1**
(45) Date de publication et mention de la délivrance du brevet: **27.01.1999**
(21) Numéro de dépôt: 95410040.0
(22) Date de dépôt: 02.05.1995
(51) Int. Cl.: H02G 5/02

(54) **Conducteur de courant pour un dispositif de jeu de barres de distribution répartie**
Stromleiter für eine Energieverteilungs-Sammelschienenanordnung
Current conductor for a distribution bus bar device

(30) Priorité: 06.05.1994 FR 9405864
(43) Date de publication de la demande: 08.11.1995
(73) Titulaire: SCHNEIDER ELECTRIC SA, 92100 Boulogne Billancourt (FR)
(72) Inventeur: Vigne-Salade, Pierre, F-38050 Grenoble Cedex 09 (FR); Chapperon, Patrick, F-38050 Grenoble Cedex 09 (FR)
(74) Mandataire: Hecké, Gérard

(56) Documents cités:
- CA-A- 951 421
- DE-U- 1 905 583
- DE-U- 1 905 584
- FR-A- 2 622 120
- US-A- 2 904 621

## Description

L'invention est relative à un dispositif de jeu de barres pour une installation d'alimentation et/ou de distribution électrique à basse tension, comprenant :
- au moins un conducteur de courant en forme de profilé allongé monobloc réalisé à partir d'un matériau bon conducteur de l'électricité, notamment à base de cuivre ou d'aluminium, ledit conducteur de courant comportant une première face de contact disposée au droit d'une rainure longitudinale de logement d'un organe de fixation, et au moins une deuxième face d'appui,
- le profilé de chaque conducteur de courant comportant une encoche semi-ouverte en forme de C, délimitée par une première et une deuxième ailes parallèles réunies à une branche commune,
- la rainure centrale est agencée entre deux saillies respectives des ailes, chaque saillie étant conformée en crochet ayant une arête rectiligne s'étendant parallèlement aux ailes, et la largeur de la rainure mesurée entre les arêtes des saillies étant inférieure à la distance de séparation des deux ailes .

Un tel dispositif est décrit dans 1 document DE-U-1905583.
Certains conducteurs de courant utilisés dans les jeux de barres de distribution électrique sont revêtus d'une couche de peinture avec une couleur prédéterminée. Pour éviter une détérioration de la couche de peinture, il est nécessaire d'utiliser des conditionnements spéciaux protégeant les surfaces lisses apparentes. Il est également recommandé de prendre des précautions lors du montage des barres dans l'armoire électrique pour empêcher tout choc ou dégradation de la peinture.

Le document DE-U-1.905.584 se rapporte à un profilé non symétrique dans lequel des bandes colorées sont collées sur des faces du conducteur. Ces bandes ne sont pas protégées, et peuvent être abimées en cours d'exploitation.
L'objet de l'invention consiste à améliorer la structure d'un conducteur de courant en forme de profilé.
Le dispositif de jeu de barres est caractérisé en ce que la branche commune est dotée de deux ailettes disposées dans le prolongement des ailes, et ayant chacune une longueur sensiblement identique à celle de chaque aile pour former une première section de base carrée ayant pour côté une distance d prédéterminée, et que l'un des côtés perpendiculaire à la première face de contact comporte au moins une ailette supplémentaire située dans une deuxième section adjacente à la première section de base, avec une variation du pas correspondant à la moitié de ladite distance d.

Selon un mode de réalisation préférentiel, le profilé est avantageusement symétrique par rapport au plan passant par la branche commune.
Le raccordement d'un conducteur de liaison à la première face de contact du profilé s'effectue au moyen d'une vis ayant une tête rendue imperdable par des moyens élastiques à l'intérieur de l'encoche semi-ouverte, et une tige filetée de section cylindrique s'étendant à travers la rainure vers l'extérieur du profilé pour coopérer avec un écrou lors du serrage d'un conducteur de liaison contre la première face de contact. Le montage de la vis à l'intérieur du profil s'opère depuis la face avant.

Selon une caractéristique de l'invention, la surface latérale externe de la deuxième face d'appui est équipée d'une saignée s'étendant dans la direction longitudinale du profilé, le fond de ladite saignée étant recouvert par une couche de peinture constituant des moyens de visualisation. La profondeur de la saignée est inférieure à un millimètre, et s'étend de manière continue le long de la surface externe.

D'autres avantages et caractéristiques ressortiront plus clairement de la description qui va suivre d'un mode de réalisation de l'invention donné à titre d'exemple non limitatif, et représenté aux dessins annexés, dans lesquels :
- Les figures 1 à 8 montrent des vues en section de différentes formes de profilés du conducteur de courant ;
- la figure 9 est une vue partielle en perspective d'une autre variante de conducteur ;
- la figure 10 est une vue en coupe selon la ligne 10-10 de la figure 9 ;
- la figure 11 représente une vue en perspective du dispositif de jeu de barres utilisant les conducteurs de courant selon l'invention ;
- la figure 12 est une vue en coupe selon la ligne 12-12 de la figure 11 ; gure 13 est une vue de détail en perspective à échelle agrandie de la figure 12, montrant la vis de fixation ;
- la figure 14 est une vue du cavalier élastique équipant la tète de vis de la figure 13.

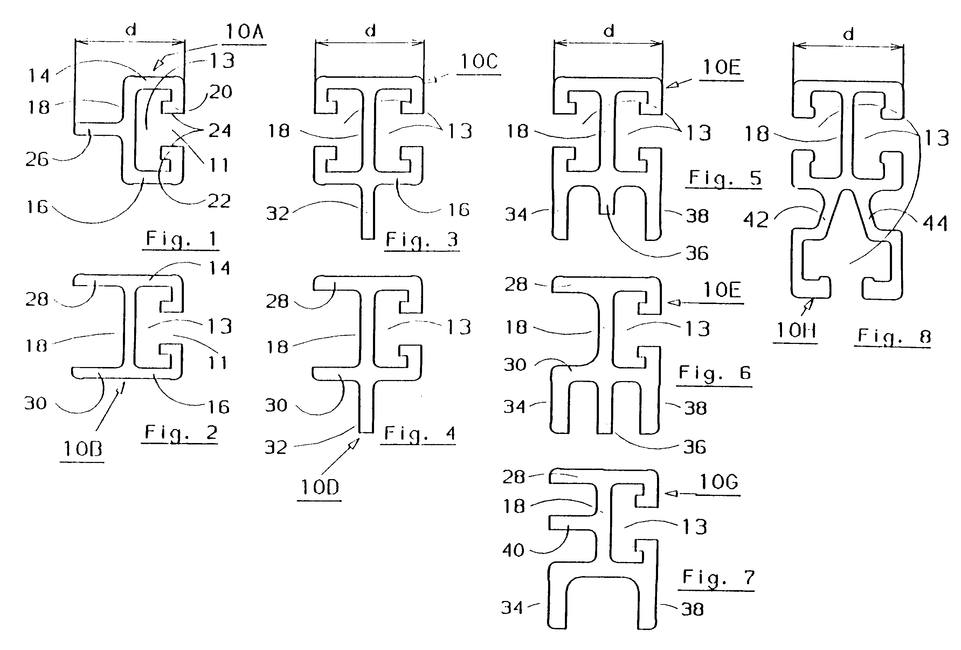

Selon les figures 1 à 8, les conducteurs de courant sont constitués par des profilés de différentes sections, et réalisés à partir d'un matériau bon conducteur de l'électricité, notamment du cuivre ou de l'aluminium. Ces conducteurs peuvent être utilisés dans un jeu de barres multipolaires d'une installation de distribution électrique à basse tension.

Sur la figure 1, le profilé du conducteur de courant 10A possède une section en forme de C comprenant une rainure 11 longitudinale associée à une première et une deuxième aile 14, 16 parallèles, lesquelles sont réunies à une branche 18 commune. La rainure 11 centrale est délimitée entre deux saillies 20, 22 respectives des ailes 14, 16, chaque saillie 20, 22 étant conformée en crochet ayant une arête 24 rectiligne s'étendant parallèlement aux ailes 14, 16. La largeur de la rainure 11 mesurée entre les arêtes 24 des saillies 20, 22 est inférieure à la distance séparant les deux ailes 14, 16 parallèles. L'espace interne du profilé constitue une encoche 13 semi-ouverte, dont l'accès s'effectue au niveau de la rainure 11. La branche 18 commune porte une ailette 26 centrale, agencée du côté extérieur à la rainure 11.

Selon la variante de la figure 2, le conducteur de courant 10B possède une structure similaire à celle du conducteur 10A de la figure 1, mais la branche 18 est dotée de deux ailettes 28, 30 disposées respectivement dans le prolongement des ailes 14, 16.

Dans la figure 3, le profilé du conducteur 10C comporte deux encoches 13 identiques, disposées symétriquement dos à dos au niveau de la branche 18 commune. Une ailette 32 s'étend dans le prolongement de la branche 18 et perpendiculairement à l'aile 16.

La structure du conducteur 10D de la figure 4 est similaire à celle de la figure 2, avec une ailette 32 supplémentaire dans le prolongement de la branche 18 commune.

Le conducteur 10E de la figure 5 est similaire à celui de la figure 3, avec trois ailettes 34, 36, 38 parallèles dirigées vers le bas. L'ailette centrale 36 se trouve dans le prolongement de la branche 18, et est plus courte que les deux autres ailettes 34, 38 adjacentes. Le profilé 10F de la figure 6 correspond à celui de la figure 4 mais avec trois ailettes 34, 36, 38 inférieures de mêmes longueurs.

Le conducteur de courant 10G de la figure 7 est équipé de deux ailettes 28, 40 horizontales et deux ailettes 34, 38 verticales. La totalité des conducteurs de courant 10C à 10G illustrés sur les figures 3 à 7, présente des profilés de mêmes encombrements 30 x 45 mm.

Sur la figure 8, le profilé du conducteur 10H est doté de trois encoches 13 en C, dont les deux supérieures sont accolées l'une à l'autre par la branche 18. La liaison avec la troisième encoche 13 inférieure s'effectue au moyen d'ailettes 42, 44 inclinées. L'encombrement du conducteur 10H correspond à 30 x 60 mm.

La distance d correspondant à une largeur de 30 mm est identique pour tous les profilés des conducteurs 10A à 10H. La hauteur de 30 mm est également la même pour la première série des deux conducteurs 10A et 10B. Elle est de 45 mm pour tous les conducteurs 10C à 10G de la deuxième série, et atteint 60 mm pour le dernier conducteur 10H. La variation du pas dans le sens de la hauteur est de 15 mm d'une série à l'autre.

Les ailettes des différents conducteurs de courant 10A à 10H font partie intégrante des profilés, et présentent des sections sensiblement identiques à celles des ailes 14, 16, et de la branche 18. La longueur de chaque ailette est sensiblement identique à celle de chaque aile 14, 16.

Le profilé selon les figures 3, 5 et 8 est symétrique par rapport au plan passant par la branche commune 18.

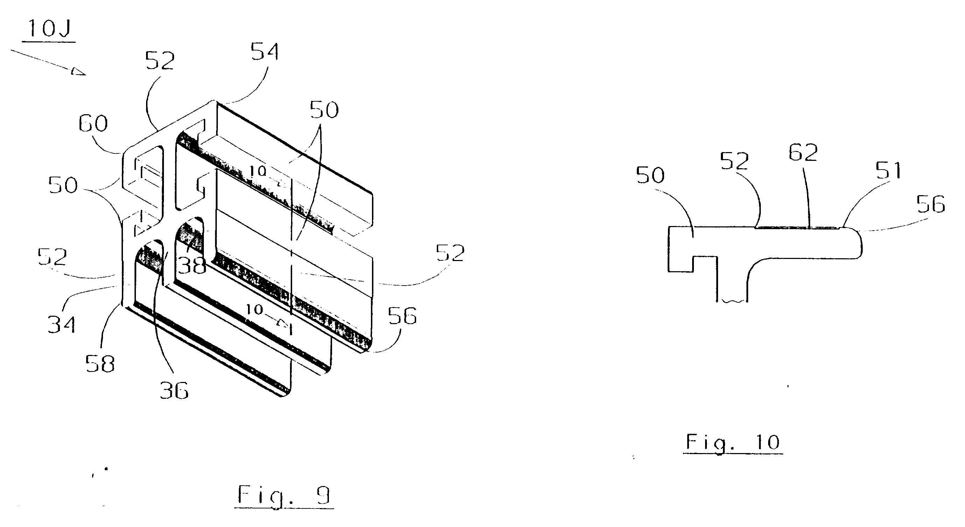

Sur les figures 9 et 10, le conducteur de courant 10J présente la forme générale du conducteur 10E de la figure 5, avec l'ailette centrale 36 de même longueur que les deux autres ailettes 34, 38 latérales. La surface latérale extérieure du conducteur de courant 10J comporte une face de contact 50 disposée au droit de la rainure 11 de chaque encoche 13, et une pluralité de faces d'appui 51 équipées de saignées 52 s'étendant dans la direction longitudinale du profilé. La profondeur des saignées 52 est minime et correspond à un décrochement inférieur à un millimètre. La présence des saignées 52 est particulièrement avantageuse lorsque la surface externe des faces d'appui 51 du conducteur de courant est recouverte de peinture. Le fond de chaque saignée 52 se trouve en retrait par rapport au plan des faces de contact 50, et des zones de jonctions angulaires 54, 56, 58, 60, lesquelles sont agencées aux quatre coins du profilé. Le revêtement de peinture 62 (figure 10) sur le fond des saignées 52 ne vient pas en engagement avec des faces de maintien faisant partie du support de jeux de barres, et est ainsi à l'abri de tout frottement, lequel s'exerce exclusivement sur les faces d'appui 51 en saillie.

Il est clair que les conducteurs 10A à 10H des figures 1 à 8 sont également pourvus de saignées 52 selon l'invention.

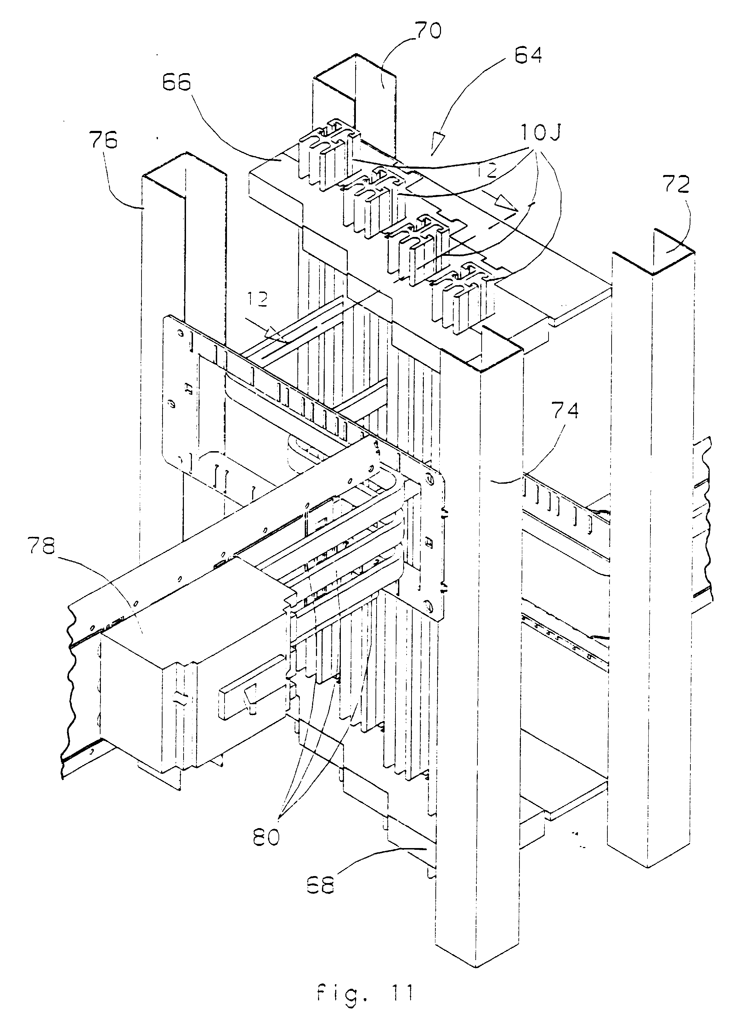

Sur la figure 11, un dispositif de jeu de barres 64 multipolaire comporte quatre barres 10J verticales s'étendant parallèlement les unes par rapport aux autres au moyen d'une pluralité de blocs supports 66, 68... en matériau isolant. Les blocs supports 66, 68 horizontaux sont solidarisés à des montants 70, 72, 74, 76 verticaux d'un châssis, et sont agencés pour assurer un décalage prédéterminé entre les différentes barres 10J. Un disjoncteur 78 ou tout autre appareillage électrique d'une même rangée, est connecté aux barres 10J respectives par des conducteurs de liaison 80 préfabriqués de sections planes et rectangulaires.

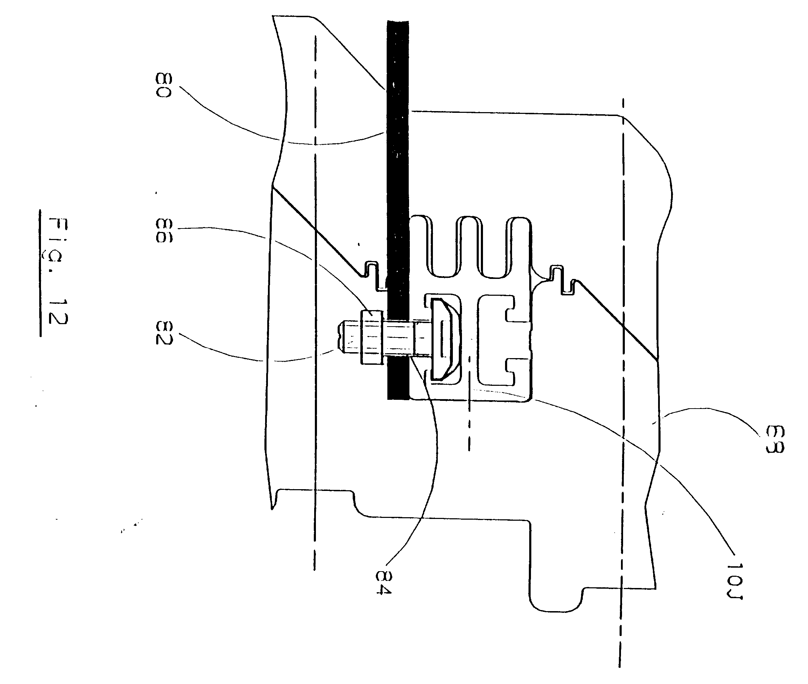

La connexion électrique au niveau de chaque barre 10J est illustrée sur la figure 12, et s'opère au moyen d'un organe de fixation comprenant une vis de fixation 82, dont la tête est montée imperdable par des moyens élastiques à l'intérieur de l'une des encoches 13 du profilé. La tige filetée de la vis 82 s'étend à travers la rainure 11 vers l'extérieur du profilé, en traversant un trou 84 ménagé à l'extrémité du conducteur de liaison 80. Un écrou 86, accessible de l'extérieur, coopère avec la vis 82 pour assurer le serrage du conducteur 80 contre la face de contact 50 du profilé.

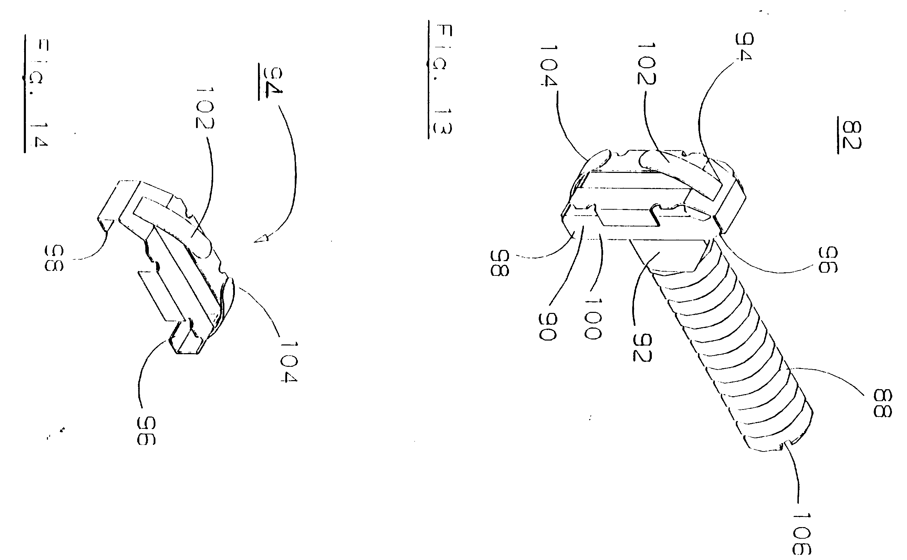

La figure 13 montre en détail la structure de la vis 82. La tige filetée 88 de section cylindrique est raccordée à la tête 90 par une collerette 92 de section parallélépipédique, susceptible de s'insérer dans la rainure 11 du profilé en empêchant tout mouvement d'entraînement en rotation de la vis 82 lors du serrage par l'écrou 86. Un léger jeu est ménagé entre la collerette 92 de maintien et les arêtes 24 rectilignes des saillies 20, 22 du profilé pour autoriser un mouvement de coulissement de la vis 82 le long de la rainure 11 en fonction de la position longitudinale du conducteur de liaison 80.
Les moyens élastiques, empêchant la chute de la vis 82 le long de la rainure 11 lorsque le profilé du conducteur de courant est disposé verticalement, sont formés par un cavalier 94 rapporté sur la tête 90 et jouant le rôle de ressort. Le cavalier 94 est réalisé en un matériau métallique, notamment en acier inoxydable, et comporte deux languettes 96, 98 de verrouillage destinés à s'encliqueter sur les extrémités opposées de la base 100 d'appui de la tête. Deux languettes 102, 104 élastiques font saillie de la tête à l'opposé des languettes 96, 98 pour coopérer à frottement avec la surface interne du profilé, de manière à retenir la vis 82 dans une position longitudinale prédéterminée. La base 100 d'appui de la tête 90 sur les saillies 20, 22 peut être lisse ou légèrement striée. L'extrémité de la tige filetée 88 est dotée d'une fente 106 autorisant l'insertion d'une lame de tournevis pour faciliter le positionnement de la vis dans la rainure 11. La présence de la fente 106 permet également de s'assurer de la bonne position de la tête de vis dans la rainure 11.

## Revendications

1. Dispositif de jeu de barres pour une installation d'alimentation et/ou de distribution électrique à basse tension, comprenant :
- au moins un conducteur de courant en forme de profilé allongé monobloc réalisé à partir d'un matériau bon conducteur de l'électricité, notamment à base de cuivre ou d'aluminium, ledit conducteur de courant (10A) à (10J) comportant une première face de contact (50) disposée au droit d'une rainure (11) longitudinale de logement d'un organe de fixation, et au moins une deuxième face d'appui (51),
- le profilé de chaque conducteur de courant comportant une encoche (13) semi-ouverte en forme de C, délimitée par une première et une deuxième ailes (14, 16) parallèles réunies à une branche commune (18),
- la rainure (11) centrale est agencée entre deux saillies (20, 22) respectives des ailes (14, 16), chaque saillie (20, 22) étant conformée en crochet ayant une arête (24) rectiligne s'étendant parallèlement aux ailes (14, 16), et la largeur de la rainure (11) mesurée entre les arêtes (24) des saillies (20, 22) étant inférieure à la distance de séparation des deux ailes (14,16).
caractérisé en ce que :
la branche commune (18) est dotée de deux ailettes (28, 30) disposées dans le prolongement des ailes (14, 16), et ayant chacune une longueur sensiblement identique à celle de chaque aile (14, 16) pour former une première section de base carrée ayant pour côté une distance d prédéterminée, et que l'un des côtés perpendiculaire à la première face de contact (50) comporte au moins une ailette supplémentaire ( 32, 34, 36, 38, 42, 44) située dans une deuxième section adjacente à la première section de base, avec une variation du pas correspondant à la moitié de ladite distance d.

2. Dispositif de jeu de barres selon la revendication 1, caractérisé en ce que le profilé dudit conducteur est symétrique par rapport au plan passant par la branche commune (18).

3. Dispositif de jeu de barres selon la revendication 1 ou 2, caractérisé en ce que l'ailette supplémentaire (32) est disposée dans la deuxième section en prolongement de la branche commune (18) médiane.

4. Dispositif de jeu de barres selon la revendication 1 ou 2, caractérisé en ce que deux ailettes supplémentaires (34, 38) parallèles sont séparées l'une de l'autre dans la deuxièle section par ladite distance d.

5. Dispositif de jeu de barres selon la revendication 1, caractérisé en ce que l'organe de fixation est formé par une vis (82) ayant une tête (90) montée imperdable par des moyens élastiques à l'intérieur de l'encoche (13) semi-ouverte, et une tige filetée (88) de section cylindrique s'étendant à travers la rainure (11) vers l'extérieur du profilé pour coopérer avec un écrou (86) de serrage d'un conducteur de liaison (80) contre la première face de contact (50), et que la tige filetée (88) est raccordée à la tête (90) par une collerette (92) de section rectangulaire agencée avec jeu dans la rainure (11) pour autoriser un mouvement de coulissement de la vis (82) le long du profilé, et que les moyens élastiques de la vis (82) comportent un cavalier (94) rapporté sur la tête (90) pour jouer le rôle de ressort anti-retombée.

6. Dispositif de jeu de barres selon la revendication 5, caractérisé en ce que le cavalier (94) est réalisé en un matériau métallique, et comporte au moins un ergot (96, 98) de verrouillage destiné à s'encliqueter sur une base (100) d'appui de la tête (90), et au moins une languette (102, 104) élastique faisant saillie de la tête à l'opposé de l'ergot pour coopérer à frottement avec la surface interne de l'encoche (13).

7. Dispositif de jeu de barres selon la revendication 1, comprenant des moyens de visualisation agencés sur le conducteur, caractérisé en ce que la surface latérale externe de la deuxième face d'appui (51) est équipée d'une saignée (52) s'étendant dans la direction longitudinale du profilé, et que le fond de ladite saignée (52) est recouvert par une couche de peinture (62) constituant lesdits moyens de visualisation.

8. Dispositif de jeu de barres selon la revendication 7, caractérisé en ce que la profondeur de la saignée (52) est inférieure à un millimètre, et s'étend de manière continue le long de la surface externe.

## Patentansprüche

1. Sammelschienenanordnung für eine elektrische Niederspannungs-Einspeisung oder -Verteilung mit
- mindestens einem Stromleiter in Form eines einstückigen Längsprofils aus einem Material guter elektrischer Leitfähigkeit, insbesondere einem Kupfer- oder Aluminiumwerkstoff, wobei der genannte Stromleiter (10A) bis (10J) eine rechtwinklig zu einer, zur Aufnahme eines Befestigungselements dienenden Längsöffnung (11) angeordnete erste Kontaktfläche (50) sowie mindestens eine zweite Auflagefläche (51) aufweist,
- das Profil jedes Stromleiters einen halboffenen C-förmigen Hohlraum aufweist (13), der durch einen ersten und einen zweiten Schenkel (14, 16), welche parallel zueinander angeordnet und mit einem gemeinsamen Steg (18) verbunden sind, begrenzt wird,
- die Mittelöffnung (11) zwischen zwei Einsprüngen (20, 22) der beiden Schenkel (14, 16) angeordnet ist, jeder der hakenförmig ausgebildeten Einsprünge (20, 22) eine parallel zu den Schenkeln (14, 16) verlaufende geradlinige Kante (24) aufweist und die zwischen den Kanten (24) der Einsprünge (20, 22) gemessene Breite der Öffnung (11) geringer ist als der Abstand zwischen den beiden Schenkeln (14, 16),
dadurch gekennzeichnet, daß
der gemeinsame Steg (18) mit zwei, in der Verlängerung der Schenkel (14, 16) ausgebildeten Rippen (28, 30) versehen ist, deren jeweilige Länge annähernd der Länge jedes der Schenkel (14, 16) entspricht, um so einen ersten quadratischen Grundquerschnitt mit einem bestimmten Abstand d als Kantenlänge zu bilden, und daß eine der zur ersten Kontaktfläche (50) rechtwinklig angeordneten Seiten mindestens eine zusätzliche Rippe (32, 34, 36, 38, 42, 44) aufweist, die innerhalb einer, an die erste Grundquerschittsfläche angrenzenden zweiten Querschnittsfläche angeordnet ist, wobei das entsprechende Teilungsmaß dem halben Wert des genannten Abstands d entspricht.

2. Sammelschienenanordnung nach Anspruch 1, dadurch gekennzeichnet, daß das Profil des genannten Leiters in bezug auf die durch den gemeinsamen Steg (18) verlaufende Ebene symmetrisch ist.

3. Sammelschienenanordnung nach Anspruch 1 oder 2, dadurch gekennzeichnet, daß die zusätzliche Rippe (32) in der Verlängerung des mittigen gemeinsamen Stegs (18) innerhalb der zweiten Querschnittsfläche angeordnet ist.

4. Sammelschienenanordnung nach Anspruch 1 oder 2, dadurch gekennzeichnet, daß zwei parallel zueinander angeordnete zusätzliche Rippen (34, 38) innerhalb der zweiten Querschnittsfläche durch den genannten Abstand d voneinander getrennt sind.

5. Sammelschienenanordnung nach Anspruch 1, dadurch gekennzeichnet, daß das Befestigungselement als Schraube (82) ausgebildet ist, deren Kopf (90) mit Hilfe von Federmitteln unverlierbar im Innern des halboffenen Hohlraums (13) montiert ist, und deren Gewindeschaft (88) mit zylindrischem Querschnitt durch die Öffnung (11) aus dem Profil herausragt, um mit einer Mutter (86) zum Festklemmen eines Verbindungsleiters (80) auf der ersten Kontaktfläche (50) zusammenzuwirken, daß der Gewindeschaft (88) mit dem Kopf (90) über einen Kragen (92) mit prismatischem Querschnitt verbunden ist, welcher mit Spiel in die Öffnung (11) eingesetzt ist, um eine Gleitbewegung der Schraube (82) entlang des Profils zu ermöglichen, und daß die Federmittel der Schraube (82) einen auf dem Kopf (90) montierten Aufsatz (94) umfassen, der dazu dient, die Funktion einer Rückhaltefeder zu erfüllen.

6. Sammelschienenanordnung nach Anspruch 5, dadurch gekennzeichnet, daß der Aufsatz (94) aus einem metallischen Werkstoff besteht und mindestens eine Verriegelungszunge (96, 98), die dazu dient, auf eine Auflagefläche (100) des Kopfes (90) aufgeschnappt zu werden, sowie mindestens eine Federzunge (102, 104) aufweist, die auf der der Zunge abgewandten Seite aus dem Kopf hervorsteht, um mit der Innenfläche des Hohlraums (13) durch Reibung zusammenzuwirken.

7. Sammelschienenanordnung nach Anspruch 1 mit am Leiter ausgebildeten Anzeigemitteln, dadurch gekennzeichnet, daß die seitliche Außenfläche der zweiten Auflagefläche (51) eine Senke (52) aufweist, die sich in Längsrichtung des Profils erstreckt, und der Boden der genannten Senke (52) mit einem die genannten Anzeigemittel bildenden Farbanstrich (62) versehen ist.

8. Sammelschienenanordnung nach Anspruch 7, dadurch gekennzeichnet, daß die Tiefe der Senke (52) weniger als einen Millimeter beträgt und sich durchgehend über die Länge der Außenfläche erstreckt.

## Claims

1. A busbar device for a low voltage electrical power supply and/or distribution installation, comprising:
- at least one current conductor in the form of an elongate monoblock profiled section made from a good electrical conducting material, notably copper or aluminium based, said current conductor (10A) to (10J) comprising a first contact face (50) located facing a longitudinal groove (11) for housing a fixing part, and at least a second bearing face (51),
- the profiled section of each current conductor comprising a C-shaped half-open groove (13), bounded by a first and second parallel wing (14, 16) joined to a common branch (18),
- the central groove (11) is arranged between two respective protrusions (20, 22) of the wings (14, 16), each protrusion (20, 22) being shaped as a hook having a straight edge (24) extending parallel to the wings (14, 16), and the width of the groove (11) measured between the edges (24) of the protrusions (20, 22) being smaller than the distance separating the two wings (14, 16),
characterized in that:
the common branch (18) is provided with two flanges (28, 30) arranged in the extension of the wings (14, 16), and each having a length appreciably identical to that of each wing (14, 16) to form a first square base section having as side dimension a predetermined distance d, and that one of the sides perpendicular to the first contact face (50) comprises at least one additional flange (32, 34, 36, 38, 42, 44) situated in a second section adjacent to the first base section, with a pitch variation corresponding to half of said distance d.

2. The busbar device according to claim 1, characterized in that the profiled section of said conductor is symmetrical with respect to the plane passing through the common branch (18).

3. The busbar device according to claim 1 or 2, characterized in that the additional flange (32) is arranged in the second section extending the middle common branch (18).

4. The busbar device according to claim 1 or 2, characterized in that two parallel additional flanges (34, 38) are separated from one another in the second section by said distance d.

5. The busbar device according to claim 1, characterized in that the fixing part is formed by a screw (82) having a head (90) mounted captive by flexible means inside the semi-open recess (13), and a threaded shaft (88) of cylindrical cross-section extending through the groove (11) towards the outside of the profiled section to cooperate with a nut (86) for tightening of a connecting conductor (80) against the first contact face (50), and that the threaded shaft (88) is joined to the head (90) by a collar (92) of rectangular cross-section, arranged with clearance in the groove (11) to allow a sliding movement of the screw (82) along the profiled section, and that the flexible means of the screw (82) comprise a strap (94) fitted on the head (90) to act as a spring preventing fall-back.

6. The busbar device according to claim 5, characterized in that the strap (94) is made of metallic material, and comprises at least one locking spur (96, 98) designed to clip onto a bearing base (100) of the head (90), and at least one flexible tab (102, 104) protruding out from the head opposite the spur to cooperate with friction with the internal surface of the recess (13).

7. The busbar device according to claim 1, comprising visualisation means arranged on the conductor, characterized in that the external lateral surface of the second bearing face (51) is equipped with a furrow (52) extending in the longitudinal direction of the profiled section, and that the bottom of said furrow (52) is covered by a coat of paint (62) constituting said visualisation means.

8. The busbar device according to claim 7, characterized in that the depth of the furrow (52) is smaller than one millimetre, and extends continuously along the extemal surface.
